# EUROPEAN PATENT APPLICATION

(11) **EP 4 224 198 A1**
(43) Date of publication of application: **09.08.2023**
(21) Application number: 22155172.4
(22) Date of filing: 04.02.2022
(51) Int. Cl.: G01S 5/02

(54) **COMMUNICATION PATH ASSESSMENT**

(71) Applicant: Nokia Technologies Oy, 02610 Espoo (FI)
(72) Inventor: ASHRAF, Muhammad Ikram, 02770 Espoo (FI); JOSHI, Satya Krishna, 90420 Oulu (FI); MICHALOPOULOS, Diomidis, 81541 Munich (DE); BARBU, Oana-Elena, 9000 Aalborg (DK)
(74) Representative: Script IP Limited

(57) **Abstract**

Aspects and embodiments relate to an apparatus configured to assess a communication path between a transmitting node and a receiving node, a method of assessing a communication path and a computer program product operable to perform the method. One aspect provides an apparatus, comprising: means to determine, for at least two frequency bands, a time of arrival at a receiving node of a reference signal transmitted by a transmitting node; means to calculate a variance in the determined time of arrival between the time of arrival determined for the at least two frequency bands; means to determine, for the at least two frequency bands, reference signal received power; means to evaluate a difference between the reference signal received power and an expected received signal power for the at least two frequency bands; means to calculate an indication of dispersion of the evaluated difference across the at least two frequency bands; and means to assess whether the calculated variance and calculated dispersion are within an expected threshold and, if both are within the expected threshold, classifying a communication link between the receiving node and transmitting node as a line of sight communication link. Aspects and embodiments recognise that by combining information from TOA, RSRP and frequency diversity information, an assessment of LOS/NLOS can be determined and an identifier of NLOS or LOS calculated.

## Description

### TECHNOLOGICAL FIELD

Various example embodiments relate to an apparatus configured to assess a communication path between a transmitting node and a receiving node, a method of assessing a communication path and a computer program product operable to perform the method.

### BACKGROUND

A wireless communication network can be used to provide network node positioning information. In particular, it is recognised that it is possible to use a wireless communication network in support of indoor and outdoor positioning techniques. By way of example, one potential application of positioning information relates to an "internet of things" in an indoor environment. A 5G wireless communication network is envisaged in which it is possible to provide accurate 3D positioning of network nodes. Such a scenario has various applications, including: asset tracking; indoor navigation, smart manufacturing, connected healthcare, smart retail, and similar.

Typically, positioning techniques are based on round trip times, angles of arrival and similar. Generally such techniques assume a line of sight (LOS) between communicating network nodes. It is appreciated that not all communication paths between nodes are line of sight paths, and that it can be useful to be aware of whether a communication path is LOS or not line of sight (NLOS).

Aspects and embodiments relate to assessment of communication paths between nodes in a communication network.

### BRIEF SUMMARY

The scope of protection sought for various embodiments of the invention is set out by the independent claims. The examples and features, if any, described in this specification that do not fall under the scope of the independent claims are to be interpreted as examples useful for understanding various embodiments of the invention.

According to various, but not necessarily all, embodiments of the invention there is provided an apparatus, comprising: means to determine, for at least two frequency bands, a time of arrival at a receiving node of a reference signal transmitted by a transmitting node; means to calculate a variance in the determined time of arrival between the time of arrival determined for the at least two frequency bands; means to determine, for the at least two frequency bands, reference signal received power; means to evaluate a difference between the reference signal received power and an expected received signal power for the at least two frequency bands; means to calculate an indication of dispersion of the evaluated difference across the at least two frequency bands; and means to assess whether the calculated variance and calculated dispersion are within an expected threshold and, if both are within the expected threshold, classifying a communication link between the receiving node and transmitting node as a line of sight communication link.

The means to determine may be configured to determine, for at least three frequency bands, a time of arrival and reference signal received power.

The means to determine may be configured to sense time of arrival.

The means to determine may be configured to sense reference signal received power.

The means to determine may be configured to sense time of arrival and/or reference signal received power directly, or an equivalent indicator thereof.

The apparatus may comprise means to transmit the time of arrival at a receiving node of a reference signal transmitted by a transmitting node and the reference signal received power for the at least two frequency bands.

The apparatus may comprise user equipment or a transmission and reception node or a base station in a wireless communication network.

The means to determine may be configured to receive a report of the time of arrival and reference signal received power from another node in a network.

The apparatus may comprise a location management function node in a wireless communication network

The apparatus may be configured such that if assessing whether the calculated variance and calculated dispersion indicates that one or both of the calculated variance and calculated dispersion exceed the expected threshold, classifying the communication link between the receiving node and transmitting node as a non-line of sight communication link.

The apparatus may be configured to assign the communication link between the receiving node and transmitting node a probability of line of sight or non-line of sight based upon one or both of the calculated variance and calculated dispersion.

The variance threshold may relate to a predetermined variance in determined time of arrival between the time of arrival determined for the at least two frequency bands indicative of substantially identical time of arrival.

The dispersion threshold may relate to a predetermined dispersion in expected reference signal received power indicative for the at least two frequency bands of no reflective losses in a path between the receiving node and transmitting node.

The apparatus may comprise ranking means configured to rank or weight one or more communication links based on the classification or probability of a communication link between the receiving node and each transmitting node as a line of sight or non line of sight communication link.

The apparatus may comprise transmission means configured to transmit an indication of whether the communication link is classified as a line of sight communication link.

The apparatus may comprise calculation means configured to calculate localisation information relating to the receiving node based upon information relating to one or more communication link which has been classified as a line of sight communication link.

The apparatus may be configured to discard information relating to one or more communication link which has not been classified as a line of sight communication link.

According to various, but not necessarily all, embodiments of the invention there is provided an apparatus according to any preceding claim wherein the means comprise: at least one processor; and at least one memory including computer program code, the at least one memory and computer program code being configured to, with the at least one processor, cause the performance of the apparatus.

According to various, but not necessarily all, embodiments of the invention there is provided a method, comprising: determining, for at least two frequency bands, a time of arrival at a receiving node of a reference signal transmitted by a transmitting node; calculating a variance in the determined time of arrival between the time of arrival determined for the at least two frequency bands; determining, for the at least two frequency bands, reference signal received power; evaluating a difference between the reference signal received power and an expected received signal power for the at least two frequency bands; calculating an indication of dispersion of the evaluated difference across the at least two frequency bands; assessing whether the calculated variance and calculated dispersion are within an expected threshold and, if both are within the expected threshold, classifying a communication link between the receiving node and transmitting node as a line of sight communication link.

The method may comprise sensing time of arrival.

The method may comprise sensing reference signal received power.

The means to determine may be configured to determine, for at least three frequency bands, a time of arrival and reference signal received power.

The method may comprise transmitting the time of arrival at a receiving node of a reference signal transmitted by a transmitting node and the reference signal received power for the at least two frequency bands.

The method may comprise receiving a report of the time of arrival and reference signal received power from another node in a network.

The method may comprise assessing whether the calculated variance and calculated dispersion indicates that one or both of the calculated variance and calculated dispersion exceed the expected threshold, and if so, classifying the communication link between the receiving node and transmitting node as a non-line of sight communication link.

The variance threshold may relate to a predetermined variance in determined time of arrival between the time of arrival determined for the at least two frequency bands indicative of substantially identical time of arrival.

The dispersion threshold may relate to a predetermined dispersion in expected reference signal received power indicative for the at least two frequency bands of no reflective losses in a path between the receiving node and transmitting node.

The method may comprise transmitting an indication of whether the communication link is classified as a line of sight communication link.

The method may comprise transmitting an indication of whether the communication link is classified as a non-line of sight communication link.

The method may comprise calculating localisation information relating to the receiving node based upon information relating to one or more communication link which has been classified as a line of sight communication link.

The method may comprise discarding information relating to one or more communication link which has not been classified as a line of sight communication link.

A further aspect may provide a computer program product operable, when executed on a computer, to perform the method.

Further particular and preferred aspects are set out in the accompanying independent and dependent claims. Features of the dependent claims maybe combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates potential impact of a Non- Line of Sight (NLOS) path to position error calculations;
FIG. 2 illustrates graphically channel tap search in channel profile;
FIG. 3 illustrates graphically impact of obstacles and noise across a range of frequencies;
FIG. 4 illustrates graphically impact of obstacles across a range of frequencies;
FIG. 5 is a flow chart illustrating one general embodiment of the subject matter described herein;
FIG. 6 is an illustrative signalling flow for UE-based positioning methods; and
FIG. 7 is an illustrative signalling flow for UE-assisted positioning methods.

### DETAILED DESCRIPTION

Before discussing the example embodiments in any more detail, first an overview will be provided.

It is recognised that a wireless communication network can be used to provide network node positioning information. In particular, it is recognised that it is possible to use a wireless communication network to provide indoor and outdoor positioning techniques. By way of example, one potential application of positioning information relates to an "internet of things" in an indoor environment. A 5G wireless communication network is envisaged in which it is possible to provide accurate 3D positioning of network nodes. Such a scenario has various applications, including: asset tracking; indoor navigation, smart manufacturing, connected healthcare, smart retail, and similar.

Typically, positioning techniques are based on round trip times, angles of arrival and similar. Generally such techniques assume a line of sight (LOS) between communicating network nodes. It is appreciated that not all communication paths between nodes are line of sight paths, and that it can be useful to be aware of whether a communication path is LOS or not line of sight (NLOS).

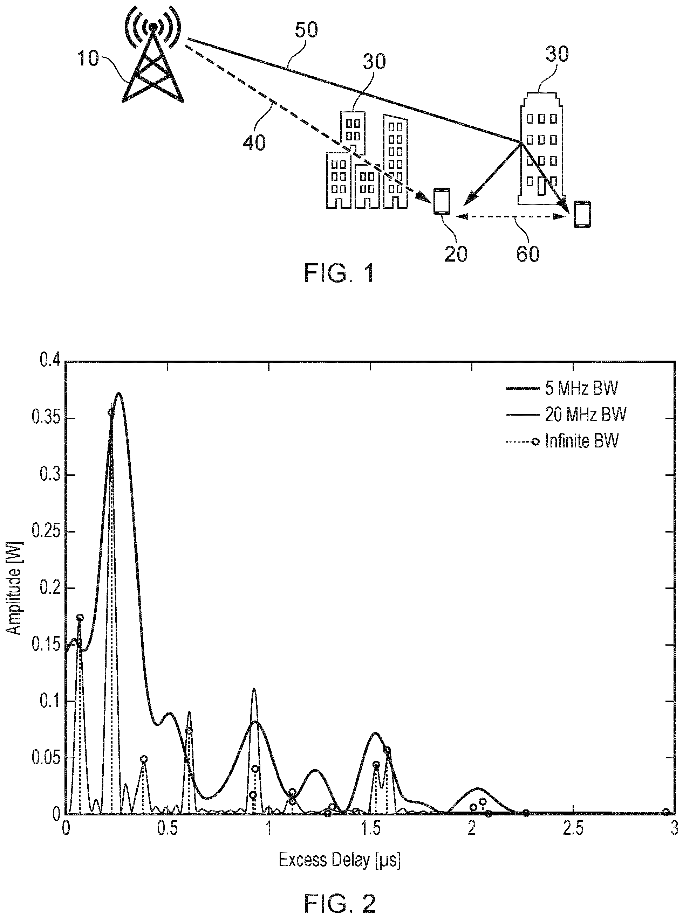

It will be appreciated that the impact of NLOS measurements in positioning is reduced accuracy. In particular, a reflected path increases the error in position estimation FIG. 1 illustrates potential impact of a Non- Line of Sight (NLOS) path to position error calculations. FIG. 1 shows a base station 10, more generally referred to as a transmission/reception point (TRP) communicating with user equipment (UE) 20. As shown in FIG. 1 there are buildings 30 which can block or reflect radio paths between base station 10 and user equipment 20. The line of light (LOS) path 40 between base station and user equipment is blocked. A reflected or non-line of sight (NLOS) communication path 50 exists between the base station and the user equipment. Measurements and calculations conducted on the NLOS path 50 as if it was a LOS path assume an incorrect geometry between the base station and the UE. The assumption results in estimation error 60 in relation to the location of UE, since location of the reflector, in this case, a building, and the complete path (Tx-reflector-UE) is unknown.

It will therefore be appreciated that it can be helpful, at least for the purposes of meaningful and accurate positioning calculations, to know whether a communication path between two nodes in a network is a LOS or NLOS path. Typically, a time-of-arrival (TOA) metric is used for localization. TOA is the shortest time a signal takes to travel between transmitter and receiver. To compute the TOA, most of cellular system estimate the power-delay profile (PDP) of the wireless channel and select the TOA of the delay at which PDP exhibit a power peak. However, the strongest path may not always correspond to the LOS path for various reasons, including the geometry set out in relation to FIG. 1, but also because a wireless channel propagates and suffers different consequences at cmWave compared to mmWave due to, for example, multipath effects.

Nonetheless, the majority of positioning methods used in relation to wireless communication network localization techniques assume LOS paths, or equivalently, assume that a proper classification of measured data is carried out, such that only the LOS measurements are included in the location estimation process.

A mechanism to determine which communication paths between two network nodes are LOS and which are NLOS would be useful in support of at least localization techniques.

However, classifying measurements, and therefore communication paths, as LOS or NLOS, can be a complex problem, and may be computationally significant. Such complexity can render implementation of such classification unattractive for positioning methods, particularly for industry-related positioning application (for example, simple internet of things or "industry-related" applications in which UE may have a stripped down capability). At the same time, such industry-related positioning applications are typically deployed within limited and controlled areas, which can compensate for some of the perceived complexity of an NLOS/LOS classification approach. The ability to make some assumptions or to simplify the problem means that there is an inherent potential of, for example, a contained or constrainable wireless communication network to support an assessment of whether measurements conducted at the UE side are taken in relation to a LOS or NLOS path.

Provision of an indication of LOS or NLOS in relation to a communication path can be useful in relation to a location estimation process as described above. Knowledge of whether measurements are taken in relation to a LOS or NLOS communication path can be inherently useful to UE since it can provide an indication in relation to which measurements to monitor, which to discard or filter and which to keep in relation to the location estimation, and other processes, allowing for various efficiency savings.

Arrangements may provide a method capable of providing assistance information to UE to be used, for example, to assist UE-based positioning techniques. Arrangements may allow a network to assist UE with new information with LOS related content, such that the UE is able to assess whether a measurement corresponds to a LOS path with high probability.

Arrangements provide a method which can be implemented in relation to classification of a communication path between two network nodes as Line-of-Sight or Non-Line-of-Sight (LOS/NLOS). Such detection or classification can be used in respect of positioning signals to be used in high-accuracy positioning applications. For positioning use cases requiring high accuracy, awareness of whether a measured path is LOS or NLOS can be particularly useful since measurements conducted on NLOS paths highly impact the accuracy on positioning performance. The classification method envisaged by arrangements can be applicable and useful in relation to both time-based and angle-based positioning methods.

It will be appreciated that various mobile devices and positioning use cases are emerging in relation to wireless communication networks, and an ability to classify LOS/NOS in relation to channel links may be of use in other ways than mobility or positioning authentication services. For example, if a network is aware of LOS channel links between a base station and a UE, positioning use cases can be enabled. In addition, a network may utilize LOS information for resource management, for example, beamforming.

It will be appreciated that the classification method according to arrangements may be used in relation to both downlink (DL) and uplink (UL) positioning methods. Accordingly, where methods are described in relation to the downlink Positioning Reference Signal (PRS) it will be appreciated that an analogous method can me implemented in relation to the uplink Sounding Reference Signal (SRS).

LOS and NLOS identification techniques can be based on estimating or identification of a channel profile. FIG. 2 illustrates graphically channel tap search in channel profile. The graph illustrates the resolution which may be possible depending upon available bandwidth, but also illustrates issues which may occur in relation to use of channel profile to classify LOS/NLOS paths. Typically, a first tap to arrive is detected and classified as a LOS path, but it will be appreciated that the first channel to arrive may not be LOS (for example, the first to arrive may represent a reflected signal, as shown in FIG. 1). In addition, the first tap may not be the strongest one, or may not be detectable, as a result of available detection bandwidth at the receiver (see FIG. 2). It will be appreciated that power profile detection approaches have dependency on environment, channel bandwidth and noise level. To mitigate some of the issues with power detection LOS classification, it is possible to implement classification methods which apply a maximum likelihood (ML) estimation in relation to a LOS path based on power reception in conjunction with direction-of-arrival (DOA) of a signal. Such approaches require a high degree of receiver complexity. Some of the issues associated with power detection methods can be mitigated by using LOS identification methods in relation to ultrawideband devices because of the availability of high bandwidth and therefore higher resolution (as shown in FIG. 2). However, in relation to some wireless communication networks, the agreed standards do not have allocated bandwidths in excess of 500 MHz (FR2), which consequently limits path resolution and therefore some of the LOS/NLOS identification methods described above.

Time-of-arrival and received signal strength (RSS) based classification approaches can, as described above, be used in relation to identification of LOS/NLOS communication paths. TOA-based techniques are sensitive to noise and disrupted by NLOS communication paths. The accuracy of TOA-based techniques relies heavily on the measurement of noise and the multipath condition of the communication channel. RSS based approaches relate to examination of received signal power by evaluating channel condition in dependence upon the variance of power with time. However, such an assessment approach requires hypothesis testing based on prior information about the communication channels and network configuration.

Described approaches and methods are agnostic to surrounding environmental conditions and path loss models and seek to exploit frequency diversity and channel characteristics in support of assessment of whether a communication channel between two network nodes is LOS/NLOS. Arrangements exploit features of frequency diversity. Aspects recognise that low carrier frequencies offer excellent penetration through, for example, walls and mitigate NLOS conditions. In contrast, high carrier frequencies are very sensitive to the presence of obstacles. Methods in accordance with arrangements seek to use time of arrival (TOA) and received signal strength (RSS) in conjunction with frequency diversity in support of an assessment and categorisation or detection of whether a communication path is LOS/NLOS.

Arrangements relate to a method of assessing or detecting likelihood of a communication link between two network nodes being LOS or NLOS. One arrangement provides a method which can be implemented by, for example, UE operating in multi-band (e.g., FR1 and FR2). According to an arrangement, a UE may use differing measurement gaps to make measurement across the available different frequency bands. In a multipath fading channel, power delay profile (PDP) of received signals behave differently in different frequency bands, for example, at a low frequency a delay spread is large, but at a high-frequency a delay spread is small. Furthermore, since reflection loss of a surface depends on the frequency of the signal (at higher frequencies reflection loss is higher compared to that which is experienced at lower frequencies), received Reference Signal Received Power (RSRP) of a NLOS path will be dependent upon the operating frequency range.

Arrangements recognise that a receiver can, for example, perform measurements in relation to TOA and associated RSRP across multiple frequency bands. A method can be used, based on recognition that reflection losses are different at different frequency bands in a NLOS link, compared to losses which are experienced by different frequency bands in the case of a LOS link. By combining information from TOA, RSRP and frequency diversity information, an assessment of LOS/NLOS can be determined and an identifier of NLOS or LOS calculated.

According to one implementation, a UE may be configured to collect channel measurements corresponding to multiple frequency bands. The measurements can then be used to calculate a LOS/NLOS identifier. The calculation method is based on use of: TOA information; associated RSRP dispersion measurement; and an exploitation or leveraging of information available as a result of reflection-loss behaviour over multiple frequency bands.

A detailed description of one NLOS/LOS path assessment method according to an arrangement follows:
A UE capable of operating on multiple frequency bands at the same time is provided. One arrangement provides a scheme for identification of LOS/NLOS paths based on channel measurements made by such a UE capable of operating on multiple frequency bands. In the example arrangement described, measurements can be performed on positioning reference signal, for example, the Positioning Reference Signal (PRS) in downlink. The measurements may be used directly by the UE to compute (via a method as described below) a LOS indication, that indication may comprise a binary indication (LOS/NLOS); a soft indication (a probability of LOS); or a comparative indication applied across more than one communication link between two network nodes. The LOS indication can then be reported to another node in the network, for example, the Location Management Function (LMF). Alternatively, or additionally, the LOS indication may be used locally by the UE in relation to one or more applications, for example, location estimation. It will be appreciated that some implementations, the measurements taken by the UE may be reported to another node in the network, for example, the LMF, which may then be configured to apply an estimate or identification method described below to compute an LOS indication in relation to a communication channel.

Although described in relation to reception and measurement of channels taken in the downlink by a UE, it will be appreciated that any transmission and reception point (TRP) node in a network with appropriate multiple frequency band reception capability may be configured to perform an analogous set of measurements and calculations, for example, in relation to Sounding Reference Signals (SRS) transmitted by UE in uplink, in support of an assessment of LOS/NLOS determination.

### LOS/NLOS Assessment

NLOS/LOS assessment methods in accordance with arrangements include two characteristic steps, which can be applied sequentially to assist in assessing whether communication channels between network nodes in a wireless communication network display LOS/NLOS characteristics. As described above, the calculations may be performed by a UE or performed at the network side. Wherever the calculation occurs, an indication of the outcome of the LOS assessment can be provided to one or more other nodes within a wireless network for appropriate use.

A first characteristic step provides that a receiving network node, for example, a UE, is configured to determine or measure time of arrival (TOA) of a reference signal. Such a determination may occur, for example, using state of the art methods including those which are cross-correlation based. Those TOA determinations are made at the receiving node simultaneously across different frequency bands.

**Table -1: example table with four frequency bands**

| Frequency 1 | Frequency 2 | Frequency 3 | Frequency 4 |
|---|---|---|---|
| TOA - *τ*₁ | TOA - *τ*₂ | TOA-*τ*₃ | TOA - *τ*₄ |

According to an arrangement, a calculation of the dispersion of measured TOAs is made. It will be appreciated that the measure of dispersion can be any appropriate calculable indicator, including, for example, mean squared error (MSE), standard deviation, root mean squared error (RMSE), or similar. The dispersion measure is represented as TOA(σ).

Arrangements recognize that one indicator of whether a communication path between network nodes is LOS is whether the TOA across all frequency bands is sufficiently similar, since TOA (indicative to distance in a LOS link) ought to be similar. According to some arrangements, a threshold dispersion ε is used as a minimum value indicative of detection of a LOS path with the TOA dispersion metric TOA(σ). For instance, threshold ε can be defined above the noise floor level, to take into account expected noise in a real world application. Accordingly, a first indicator of whether a communication link is LOS/NLOS can be performed based on the metric TOA(σ) and the threshold ε.

Arrangements recognise that a LOS/NLOS decision based on the metric TOA(σ) is necessary but not sufficient since in the case TOA(σ)<ε that could be because the link is a LOS path, or by chance all TOA measurements may happen for a communication path through the same reflector at different frequency bands, in which case TOA(σ)<ε, even though the path is NLOS. Arrangements can resolve such ambiguity exploiting the fact that a reflecting surface behaves differently in relation to different frequency bands. In other words, by recognising that reflection-loss depends on frequency.

In order to provide information to aid resolution of the potential ambiguity based solely on a TOA assessment, a network node may also be configured, along with the estimated TOAs (as in Table 1), to measure reference signal received power (RSRP) of in relation to estimated paths of the measured paths *τₙ*

**Table 2: TOA and RSRP measure of the estimated path**

| Frequency 1 | Frequency 2 | Frequency 3 | Frequency 4 |
|---|---|---|---|
| TOA - *τ*₁ | TOA - *τ*₂ | TOA - *τ*₃ | TOA - *τ*₄ |
| RSRP(*τ*₁) | RSRP(*τ*₂) | RSRP(*τ*₃) | RSRP(*τ*₄) |

Based on the determined TOAs it is possible for each frequency to compute an "ideal" RSRP based on an analytical model. The analytical model may, for example, be a free space estimation for a given distance (based on TOA), could be based on the Friis equation, or any appropriate analytical model defined for a given environment.

**Table 2: TOA and RSRP measure of the estimated path**

| Frequency 1 | Frequency 2 | Frequency 3 | Frequency 4 |
|---|---|---|---|
| TOA - *τ*₁ | TOA - *τ*₂ | TOA - *τ*₃ | TOA - *τ*₄ |
| RSRP(*τ*₁) | RSRP(*τ*₂) | RSRP(*τ*₃) | RSRP(*τ*₄) |
| ideal - RSRP(*τ*₁) | ideal - RSRP(*τ*₂) | *ideal* - RSRP(*τ*₃) | ideal - RSRP(*τ*₄) |

A determination can be made, for each frequency band, of a difference between the ideal - RSRP(*τ*ₙ) and the measured RSRP(*τ*ₙ). The difference is denoted as diff - RSRP(*τ*ₙ) .

It will be appreciated that for a given path, ideal - RSRP has linear property (with log-transformation) across a frequency band. If the path is LOS, there is also similar linear behavior for measured RSRP over frequency band with certain offset given by distance-dependent-path-loss. But if RSRP is measured in relation to a NLOS path, occurring for example, over a reflecting surface, the plot is not linear because reflection loss depends upon frequency

The non-linear behavior expected in relation to a NLOS path can be recognized and exploited in relation to the measurement diff - RSRP(*τ*ₙ). Dispersion in diff - RSRP(*τ*ₙ) can be quantified using an appropriate metric, for example, standard deviation, RMS, second-derivative, or similar and the dispersion can be denoted as RSRP*_{diff}* (σ). Again, a threshold may be selected, the threshold being selected such that if the dispersion is above the threshold, it is indicative of a NLOS path, and/or if the dispersion below that threshold, it is indicative of a LOS path.

It will be appreciated that by making measurements in relation to at least three frequency bands, it becomes possible to recognise non-linearity or curvature in expected values in, for example, the reference signal received power.

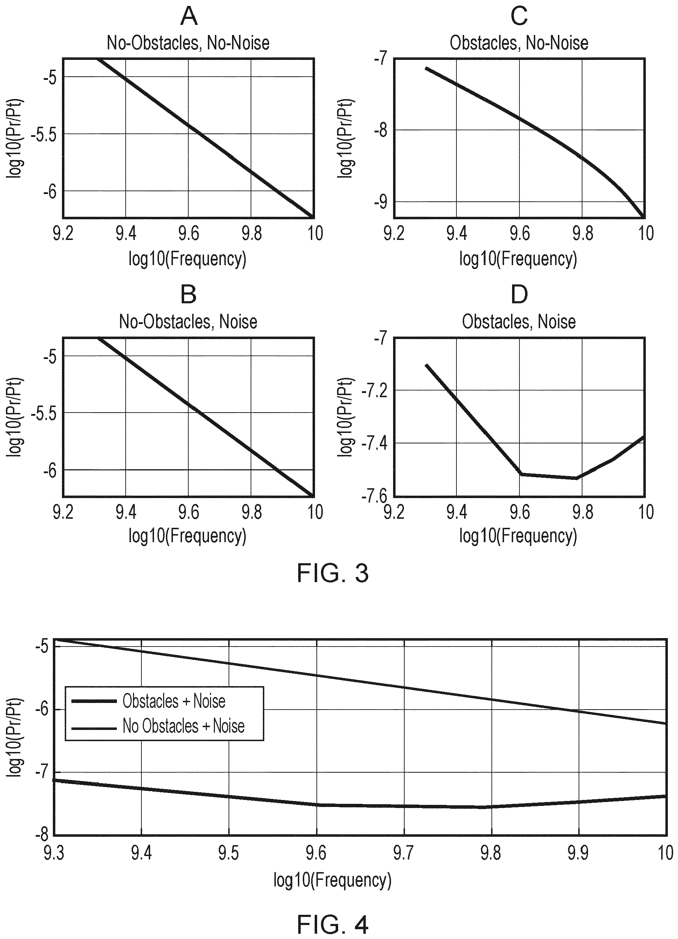

FIG. 3 illustrates graphically impact of obstacles and noise across a range of frequencies in relation to a Line of Sight (LOS) and non Line of Sight (NLOS) path. In order to see the effect of a reflector in a communication path across different frequencies, a free space path loss model has been used to create the graphical relationships shown in FIG. 3. FIG. 3 illustrates the following relationships in relation to Received Signal Power/Transmitted Signal Power and transmission frequency: (A) No-obstacles and no noise consideration; (B) No-obstacles with the noise consideration; (C) Obstacles with no noise consideration; and (D) Obstacles and noise are both considered. It can be observed from the plots in (A) and (B) with log-transformation that linear behaviour occurs, meaning that if there are no obstacles (ie the path is LOS) whether or not noise is taken into account, the effect of different frequency bands on received signal strength is linear. In the case of obstacles in a path, whether without noise (C) or with noise (D) the reflection loss in received power increases with frequency. This non-linear deviation can be used as an indication of the presence of at least one reflecting surface, and therefore of a path which is not Line of Sight (NLOS).

FIG. 4 compares the impact of obstacles (non-linear) and no obstacles (linear) across a range of frequencies with noise. It will be appreciated that in a real deployment, noise will always be experienced. It is observed that the plot behaves differently and that difference depends upon the presence or absence of obstacles. In order to verify the presence of obstacles, RSRP difference is calculated over multiple frequencies as described above. If there is variability in the difference above an expected predetermined threshold then it implies the presence of reflector (NLOS).

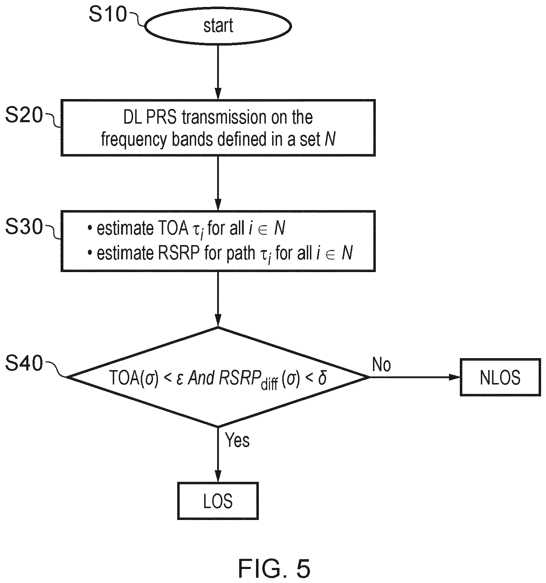

FIG. 5 is a flow chart illustrating one general embodiment of the subject matter described herein. The method comprises the following steps:
- S10:: The method is initiated
- S20:: In relation to a method performed by UE, a downlink Positioning Reference Signal (PRS) is transmitted on frequency bands in a defined set N.
- S30:: The UE is configured to receive the PRS across the frequency bands and, in relation to each frequency band in the set N, the UE makes an estimate of time of arrival (TOA) for each PRS signal in each frequency band. The UE is also configured to measure reference signal received power (RSRP) at the TOA in each frequency band and estimate or determine an ideal RSRP in relation to the reference signal for each frequency band.
- S40:: based on the measurements taken by the UE at step S20 and S30 a determination is made of the dispersion of each of: the difference between ideal-RSRP computed using Friis equation (at TO measured point) and the measured RSRP (at which TOA estimation is performed) and the dispersion of the determined TOA of the signal across the frequency bands. If both the dispersion of the times of arrival and the received power are below their respective thresholds, it is indicative that the path between the transmitter and the UE is a line of sight path. If not, then the path between the transmitter and the UE is likely to be a non line of sight path. Classification or assessment of the communication path may then be performed accordingly.

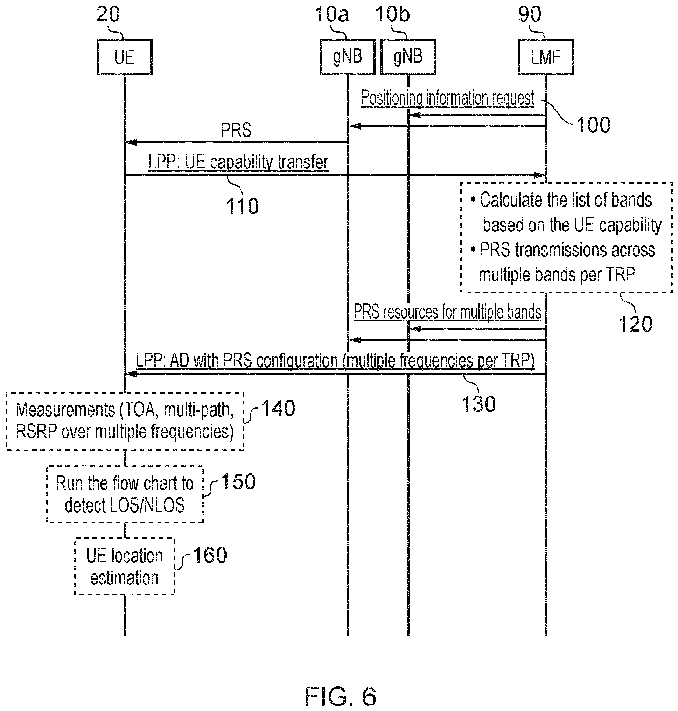

FIG. 6 is an illustrative signalling flow for UE-based positioning methods and summarizes the main signalling and processing steps of a possible implementation using the method described in relation to FIG. 5 in support of UE-based positioning. In case of UE-based positioning, signalling may occur between base stations 10a, 10b; user equipment 20 (UE) and a Location management Function node 90 within a network. As shown in Figure 6, the UE 20 may perform a NLOS/LOS path sanity check in accordance with the method described in relation to FIG. 5 to detect the LOS/NLOS paths and then make an estimate of its UE position based on appropriate information available to it from LOS paths. In response to a positioning information request 100 originating at the LMF 90 or a gNB 10a, 10b, the UE may be configured to send a capability transfer 110 to the LMF over LTE Positioning Protocol (LPP). LPP is used for the exchange of the information between UE and LMF for setting up the positioning process, as well as conveying assistance data for measurements and measurement reports. The LMF 90 is configured 120 to calculate a list of appropriate frequency bands based on the UE capability and facilitate positioning reference signal transmissions across multiple bands per base station 10a, 10b (transmission reception point). The LMF 90 is also configured to send 130 assistance data (AD) with PRS configuration per TRP for multiple frequencies over LPP to UE 20. The UE 20 is configured to perform measurements 140 for TOA, multi-path, RSRP over multiple frequencies (for example, a set of frequency bands) and the UE runs the procedure 150 described in detail in relation to FIG. 5 to provide a sanity check for LOS/NLOS path detection. The UE utilizes the LOS information to filter out the gNBs (or TRPs) which are marked as NLOS. The UE can then apply local implementation methods to infer which gNBs/TRPs are kept in the position estimation process, and which are filtered out before then performing appropriate location estimation processes 160.

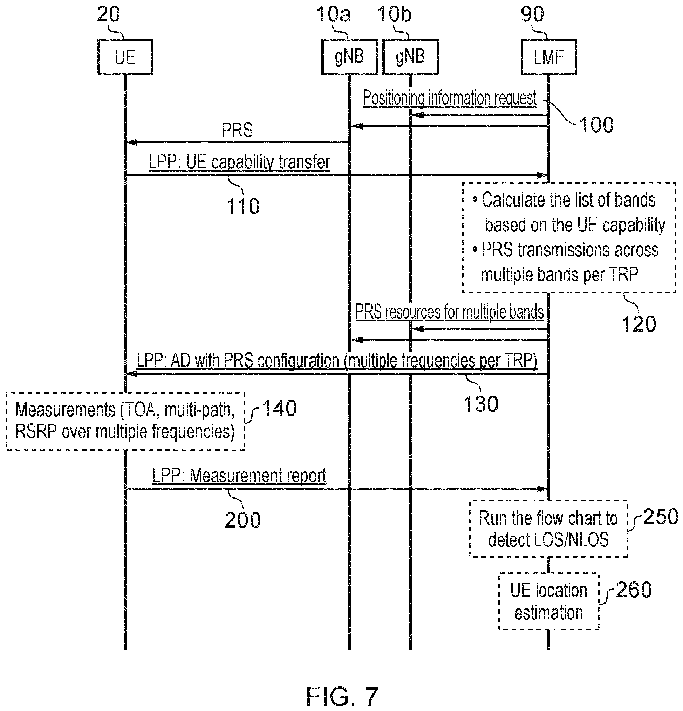

FIG. 7 is an illustrative signalling flow for UE-assisted positioning methods. The signalling approach is similar to that shown in FIG. 6, and so like reference numerals have been used to indicate like steps. In the UE-assisted positioning method shown the LMF 90 is configured to perform the estimate of UE location based on information provided by the UE 20. The UE-assisted positioning case follows a similar process to that shown in FIG. 6. The difference is that now the UE location estimation is carried out at the network side (LMF), hence the UE 20 is configured to perform 140 the measurements over multiple frequency bands mentioned and then reports 200 that information to the LMF 90 over LPP. In case of UE-assisted method, instead of processing the measurements at the UE, measurements are reported to LMF over LPP, and the LMF performs 250 the sanity check method in accordance with the flow chart of FIG.5 to provide an assessment of which gNBs have LOS/NLOS communication with the UE. Based on the LOS information, UE location is estimated 260 at LMF. The network decides which gNBs/TRPs to keep in the estimation process and which to filter out.

Having described the general concept, various general implementations which can be supported by the general concept are now described in more detail.

### Use Case Example One - Downlink positioning

Methods in accordance with arrangements can be used as a sanity check for LOS/NLOS procedures performed at the UE side. In support of UE-based positioning techniques, a UE may be configured to perform a method in accordance with described arrangements which can be used as a sanity check for a LOS/NLOS procedure. In some implementations, a UE may be configured to exclude any path(s) from a LOS based positioning calculation, based upon a result from the sanity check. In some implementations, for example, UE-assisted positioning techniques, a UE may be configured to report an outcome of a LOS/NLOS sanity check to a Location Management Function (LMF) entity within a network.

In some implementations, the UE may itself be configured to perform calculations to make an assessment of NLOS/LOS based on the measurements made. In other implementations, the UE may be configured to report the measurements made to the network and an assessment of LOS/NLOS can be made, on the basis of the UE measurements, at the network side. The result of the assessment may be used directly by an entity on the network side, or may be reported back to the UE, or a combination of both. For example, in relation to UE-based positioning, a LMF may perform a sanity check for LOS/NLOS procedure based on measurements received from the UE and the LMF may then be configured to report the valid LOS paths upon which localisation and positioning processes can or should eb based. For the case of UE-assisted positioning, a LMF may be configured to perform a sanity check for LOS/NLOS in accordance with arrangements, based on reported measurements from the UE, and then exclude paths which do not passed the LOS assessment.

### Use Case Example Two - Uplink positioning

Arrangements can provide a sanity check for a LOS/NLOS procedures performed at the NG-RAN side or at the LMF side. Implementations provide for signalling within the network of a calculated LOS/NLOS assessment or indication, where that signalling is applicable to both UE-based and UE-assisted positioning methods. The assessment of LOS or NLOS paths can be used, for example, when selecting measurements made and paths to use to estimate UE position. Such estimates can be based on approaches which are UE-based or network-based positioning approaches. The estimation of the location of the UE can be based on measurements conducted by the UE in the DL direction.

Although two particular use case examples are offered, it will be appreciated that implementations of arrangements may be of use in relation to various aspects of network operation. In particular, having an indication or assessment of whether a communication path is NLOS or LOS allows for: classification/identification of LOS/NLOS paths in support of enhanced positioning accuracy techniques; the techniques are applicable to industrial devices to detect LOS/NLOS links; the techniques can facilitate lower UE measurement requirements by supporting a filtered list of LOS TRPs; consequently, the assessment method described may have applicability in relation to facilitating UE power saving.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising
means to determine, for at least two frequency bands, a time of arrival at a receiving node of a reference signal transmitted by a transmitting node;
means to calculate a variance in the determined time of arrival between the time of arrival determined for the at least two frequency bands;
means to determine, for the at least two frequency bands, reference signal received power;
means to evaluate a difference between the reference signal received power and an expected received signal power for the at least two frequency bands;
means to calculate an indication of dispersion of the evaluated difference across the at least two frequency bands; and
means to assess whether the calculated variance and calculated dispersion are within an expected threshold and, if both are within the expected threshold, classifying a communication link between the receiving node and transmitting node as a line of sight communication link.

2. An apparatus according to claim 1, wherein the means to determine is configured to sense time of arrival.

3. An apparatus according to claim 1 or claim 2, wherein the means to determine is configured to sense reference signal received power.

4. An apparatus according to any preceding claim, comprising means to transmit the time of arrival at a receiving node of a reference signal transmitted by a transmitting node and the reference signal received power for the at least two frequency bands.

5. An apparatus according to any preceding claim, comprising user equipment or a transmission and reception node or a base station in a wireless communication network.

6. An apparatus according to claim 1, wherein the means to determine is configured to receive a report of time of arrival and reference signal received power from another node in a network.

7. An apparatus according to claim 6, comprising a location management function node in a wireless communication network

8. An apparatus according to any preceding claim, wherein if assessing whether the calculated variance and calculated dispersion indicates that one or both of the calculated variance and calculated dispersion exceed the expected threshold, classifying the communication link between the receiving node and transmitting node as a non-line of sight communication link.

9. An apparatus according to any preceding claim, wherein the variance threshold relates to a predetermined variance in determined time of arrival between the time of arrival determined for the at least two frequency bands indicative of substantially identical time of arrival.

10. An apparatus according to any preceding claim, wherein the dispersion threshold relates to a predetermined dispersion in expected reference signal received power indicative for the at least two frequency bands of no reflective losses in a path between the receiving node and transmitting node.

11. An apparatus according to any preceding claim, comprising transmission means configured to transmit an indication of whether the communication link is classified as a line of sight communication link.

12. An apparatus according to any preceding claim, comprising calculation means configured to calculate localisation information relating to the receiving node based upon information relating to one or more communication link which has been classified as a line of sight communication link.

13. An apparatus according to any preceding claim, configured to discard information relating to one or more communication link which has not been classified as a line of sight communication link.

14. An apparatus according to any preceding claim wherein the means comprise: at least one processor; and at least one memory including computer program code, the at least one memory and computer program code being configured to, with the at least one processor, cause the performance of the apparatus.

15. A method, comprising:
determining, for at least two frequency bands, a time of arrival at a receiving node of a reference signal transmitted by a transmitting node;
calculating a variance in the determined time of arrival between the time of arrival determined for the at least two frequency bands;
determining, for the at least two frequency bands, reference signal received power;
evaluating a difference between the reference signal received power and an expected received signal power for the at least two frequency bands;
calculating an indication of dispersion of the evaluated difference across the at least two frequency bands;
assessing whether the calculated variance and calculated dispersion are within an expected threshold and, if both are within the expected threshold, classifying a communication link between the receiving node and transmitting node as a line of sight communication link.
